# EUROPEAN PATENT SPECIFICATION

(11) **EP 4 250 251 B1**
(45) Date of publication and mention of the grant of the patent: **24.12.2025**
(21) Application number: 22212613.8
(22) Date of filing: 09.12.2022
(51) Int. Cl.: G06V 20/17, G06V 10/82

(54) **SYSTEM AND METHOD FOR DETECTING AND RECOGNIZING SMALL OBJECTS IN IMAGES USING A MACHINE LEARNING ALGORITHM**
SYSTEM UND VERFAHREN ZUR ERKENNUNG UND ERKENNUNG KLEINER OBJEKTE IN BILDERN UNTER VERWENDUNG EINES MASCHINENLERNALGORITHMUS
SYSTÈME ET PROCÉDÉ DE DÉTECTION ET DE RECONNAISSANCE DE PETITS OBJETS DANS DES IMAGES À L'AIDE D'UN ALGORITHME D'APPRENTISSAGE AUTOMATIQUE

(30) Priority: 24.03.2022 RU 2022107829; 01.11.2022 US 202217978311
(43) Date of publication of application: 27.09.2023
(73) Proprietor: AO Kaspersky Lab, Moscow 125212 (RU)
(72) Inventor: TUROV, Vladimir E., 125212 MOSCOW (RU); KLESHNIN, Vladimir Y., 125212 MOSCOW (RU)
(74) Representative: Chimini, Francesco

(56) References cited:
- LI XIANJIANG ET AL: "Wide-Area and Real-Time Object Search System of UAV", REMOTE SENSING, vol. 14, no. 5, 2 March 2022 (2022-03-02), pages 1 - 23, XP093048792, DOI: 10.3390/rs14051234

## Description

### FIELD OF TECHNOLOGY

The present invention relates generally to the field of computational data processing in general and, in particular, to a system and method for detecting and recognizing small objects in images using a machine learning algorithm.

### BACKGROUND

Unmanned aerial vehicles (UAVs) are increasing in popularity for various applications. For example, UAVs are prevalent among hobbyists and enthusiasts for recreation, and are increasingly considered as viable package delivery vehicles. In aerial photography from the board of an UAV, the processing and analysis of images are traditionally performed after the UAV returns to the ground and after extracting data from it.

At the same time, there are several conventional solutions that allow data processing to be performed directly and on board the UAV, but in this case significant requirements are imposed both on the size of objects in the images of images and on photo and video recording. Preferably the objects in the images should be large enough, and the size of the photos should be relatively small due to the limited computing power of the UAV. Usually, in such a picture, the size of the object should occupy a significant part of the image, for example, but not limited to, more than 20%.

Known solutions typically do not allow users to perform a number of tasks related to the rapid search for objects of small and ultra-small size relative to the size of the entire image. Examples of such tasks include, but are not limited to, the search of images to find lost people, the search and counting of affected people and/or buildings in the emergency zone. Search tasks may include: detecting and/or recognizing objects (e.g., a person, pet, building, car). Thus, there are very few optimized solutions dedicated to joint detection and recognition of small and ultra-small objects in images.

Another task that is not solved be existing solutions in the art is the processing of the image in order to detect and recognize small and ultra-small objects directly on the UAV using machine learning algorithms. Typically, if a UAV lacks certain computing power, the likelihood of recognizing the object or classifying it may be significantly reduced, and/or the time of image processing may be significantly increased. Accordingly, the lack of required computing resources may lead to a loss of information, time (e.g., if the UAV already left the zone of interest) and may lead to inefficiency in detecting objects in real time. It should be noted that the mentioned methods of image processing by UAVs using machine learning image processing algorithms usually imply only very simplified classification. In such classification, either the number of classes is typically very small (2-3), or the classes in classification have very different characteristics. For set of features that can be fed into a classifier sharing similar shape and size (for example, different types of equipment), the accuracy of classification typically is not high enough. Generally, the smaller the size of the recognized objects, the more difficult the classification task becomes.

Thus, there is a need for efficient detection, recognition and classification of objects of small and ultra-small sizes directly on board the UAV in real time.

LI XIANJIANG ET AL: "Wide-Area and Real-Time Object Search System of UAV", REMOTE SENSING, vol. 14, no. 5, 2 March 2022 (2022-03-02), pages 1-23, DOI: 10.3390/rs14051234, describes a wide-area and real-time object search system of UAV based on deep learning.

### SUMMARY

The present invention is defined by the appended claims.

Disclosed is a new approach of detection and recognition of small objects on high-resolution optical images directly on board the UAV using a computing module that includes a machine learning algorithm. Advantageously, the disclosed solution additionally enables classification of a detected object.

In an example a machine learning algorithm may include a convolutional neural network. Advantageously, the disclosed solution may be implemented using any type of UAV, including, but not limited to: airplane, helicopter and the like. The disclosed approach allows informing the operator at the ground station about the results of detection and recognition of the detected object in real time, using a radio channel or cellular network.

### BRIEF DESCRIPTION OF THE DRAWINGS

The accompanying drawings, which are incorporated into and constitute a part of this specification, illustrate one or more example embodiments of the present invention and, together with the detailed description, serve to explain their principles and implementations.
Fig. 1 shows schematically an example of an aerial vehicle (e.g., an UAV) configured to facilitate detection and recognition of small objects in images using a machine learning algorithm.
Fig. 2 is a flowchart illustrating an example method for detecting and recognizing small objects in images using a machine learning algorithm executed by a UAV.
Figs. 3A-3C illustrate an example of a detected and recognized object of interest presented as a fragment of an image in which the object of interest is recognized.
Fig. 4 presents an example of a captured image showing detected and recognized small object.
Fig. 5 illustrates two examples of images in which detected and recognized small objects are represented.
Fig. 6 shows an example of a computer system on which examples of systems and methods disclosed herein may be implemented.

### DETAILED DESCRIPTION

Exemplary embodiments are described herein in the context of a system and method for detecting and recognizing small objects in images using a machine learning algorithm. Those of ordinary skill in the art will realize that the following description is illustrative only and is not intended to be in any way limiting. Other example embodiments will readily suggest themselves to those skilled in the art having the benefit of this disclosure. Reference will now be made in detail to implementations of the example embodiments as illustrated in the accompanying drawings. The same reference indicators will be used to the extent possible throughout the drawings and the following description to refer to the same or like items.

Glossary: a number of terms are defined herein which will be used to describe example embodiments of the present invention.

"Operator," as used herein, refers to a "user" of the disclosed system.

"Small object," as used herein, refers to a spot of relatively small or ultra-small sizes in the image, while the brightness of the spot differs from the brightness of its surroundings. The term "small object" refers, in particular, to an image of an object that occupies a couple of tens of pixels and in the image (frame) having resolution of at least 4K pixels, for example, 6000x4000 pixels. With the aforementioned ratio of the size of the object to the size of the image itself, examples of a small object in the image may be a picture a private house or car, and an example of an ultra-small object may be a person. It should be noted that with high-resolution images, the disclosed system enables, on the one hand, analysis of an image covering large area of land. On the other hand, the disclosed system imposes additional requirements for the analysis of the image itself to detect objects on the ground, when the image covers territory of such wide area. For example, with a UAV flight altitude of 150 meters and the formation of photo frames of size 6000x4000 pixels (24 megapixels), where the image size is 70x46 meters, and the resolution is 1.2 pixels per cm, then the coverage of the area with one frame will be equal to 3320 square meters.

Embodiments of the present invention enable solving the shortcomings of existing systems by providing a method and device for detecting and recognizing small objects based on the analysis of high-resolution photo or video images, using a computing module configured to implement at least one machine learning algorithm.

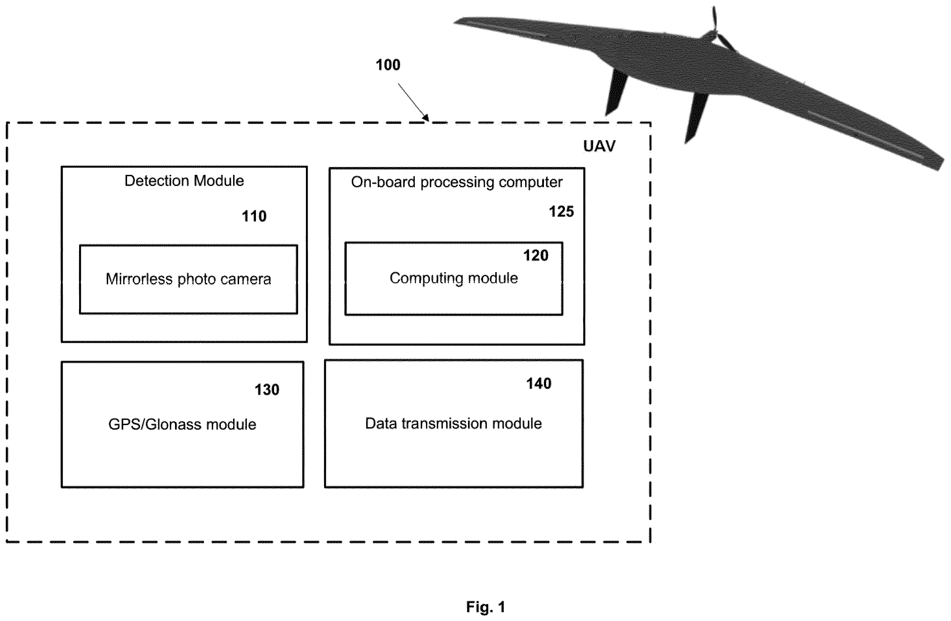

Fig. 1 shows schematically an example of an aerial vehicle (e.g., an UAV) configured to facilitate detection and recognition of small objects in images using a machine learning algorithm.

Turning UAV 100 shown in FIG. 1. The UAV 100 may be designed in accordance with commercial aviation standards and may include multiple redundancies to ensure reliability. In particular, the UAV 100 may include a plurality of systems or subsystems operating under the control of, or at least partly under the control of, an on-board processing computer 125, for example, on a microcomputer (embedded microprocessor system) that has no large dimensions for installation on a UAV and allows the necessary calculations of the claimed embodiments of the invention to be performed.

In an example, the UAV 100 may include the at least the following components shown in Fig. 1: detection module 110 and calculation (computing) module 120, which may implement an artificial neural network, a GPS / Glonass module 130 and a data transmission module 140. Additionally, the UAV 100 may contain the elements necessary for the flight for a certain time. In addition, each UAV vehicle 100 may use software configured to interact with each other and fulfill its purpose. Communication between the aforementioned modules may be provided at least by means of wired communication (cable connections).

In one example, the detection module 110 may be configured as a mirrorless photo camera capable of generating a high-resolution image of the UAV 100 during a UAV 100 flight. For example, the detection module 110 may include the Sony Alpha 6000 camera or the like. The computing module 120 (computing module) may be implemented on an on-board processing computer 125, for example, on a microcomputer (embedded microprocessor system) having dimensions suitable for installation on a UAV and allows the necessary calculations of the claimed embodiments of the invention to be performed at the required speed (for example, no more than 1 second for image processing and analysis). In an example, a microcomputer may be a stand-alone device in the form of module boards, containing an e processor, a GPU, power management systems, high-speed interfaces, and the like. An example of such a stand-alone device may be a device implemented using NVIDIA(R) Jetson^{™} or modules such as the MB164.01 from «STC "Modul». The GPS/Glonass module 130 may be configured to transmit location information (e.g., GPS coordinates of the UAV 100). The data transmission module 140 may be a standard device for communicating and receiving data over communication channels, such as a radio channel and/or cellular communications.

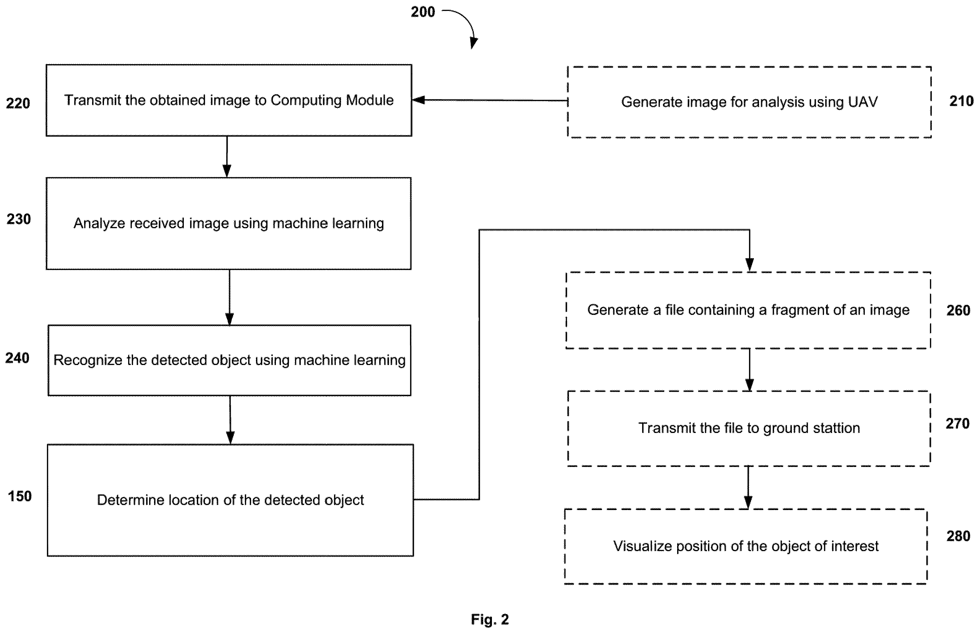

Fig. 2 is a flowchart illustrating an example method for detecting and recognizing small objects in images using a machine learning algorithm executed by a UAV.

It should be noted that in the description of the method 200, the features of the method can be used in both singular and plural, while in various examples of the method both forms can be used, except where it is indicated explicitly. For example, the term "object" may mean both one object of interest and several objects of interest. Accordingly, the term "specified parameters" may mean both the parameters of one search object and the parameters of several search objects.

The result of the detection and recognition of a small object may be the selection of a group of pixels related to the object of interest depicted on the image and the determination of the object of interest using the selected group of pixels.

The claimed method 200 for detecting and recognizing small objects in the image obtained from the detection module 110 using a computing module 120 implementing at least one machine learning algorithm, as shown in FIG. 2 may include a series of successive steps carried out by the components that make up the UAV 100.

According to the flow chart presented in Figure 2, at step 210, the detection module 110 may generate at least one image for analysis during UAV's 100 flight. In an example, the UAV 100 may fly both along a given route and under real-time control, while the UAV 100 may be further configured to dynamically adjust the route. In an example, the detection module 110 may generates images of the ground from the air at least one time per second. The resulting size of the generated image and, accordingly, the picture rendered by the image may be adjusted and may depend on the capabilities of both the detection module 110 itself and the computing capabilities of the autonomous device on which the computing module 120 may be implemented. At the same time, the picture in the obtained image should have a high resolution for analysis, since the flight of the UAV 100 may be carried out at an altitude of more than 100 meters, for example, 150 meters, so that it would be possible to analyze the obtained image.

In an example, step 210 may additionally specify the UAV's 100 flight path, photography mode, and parameters (e.g., frame-per-second frequency, image resolution) prior to image generation. In addition, the computing module 120 may obtain data about at least one object to search for it in the obtained image. The data about the object may be both another image on which the object is represented, a description of the object, the shape of the object, color, estimated size, and the like.

In an example, at step 220, in response to obtaining an image, the detection module 110 may transmit the obtained data to the computing module 120. The transmitted data may contain at least one image depicting a detected object. In addition, in real time, the calculation module 120 may additionally receive the location information (e.g., GPS coordinates and the altitude of the UAV 100) at the time of generation of the image.

In an example, at step 230, the computing module 120 may utilize a machine learning algorithm to analyze in real time each received image to search for at least one object meeting criteria provided in search options.

It should be noted that in one example the machine learning algorithm may include an artificial neural network (ANN). In example, the ANN may be preselected for searching generated images to perform detection and recognition of objects of interest based on the specified parameters. In addition, the ANN may be pre-trained and may be configured to perform additional training dynamically. Training may be performed based on a prepared list of images on which similar objects of interest were depicted in different climatic conditions, from different angles and with different background illumination. Advantageously, the training process may utilize images of the object of interest made in conditions of limited visibility. In addition, the ANN may be trained right before starting to search for the object of interest, based on provided search parameters. The search parameters may be the parameters characterizing the object of interest, such as, but not limited to, dimensions, color, geometric shape or set of shapes. For example, if the object of interest is a person, the provided search parameters may include, but are not limited to, person's size, hair color, type and color of clothes they might be wearing. If the object of interest is a building or a vehicle, then, the search parameters may include, but are not limited to, the dimensions, color of the object or its parts, the type of object. In other words the characteristic elements of the building or vehicle may be specified as search parameters.

Limited visibility, as used herein, refers to both difficult weather conditions (fog, side light, setting sun, etc.), as well as other reasons why the object of interest from above or at an angle relative to the flight of the UAV 100 may be only partially visible. For example, when searching for a person in the forest in the summer, the foliage most often covers most of the surface of the earth and may cover most of the object of interest. Accordingly, the ANN may be trained to detect fragments of the object of interest, for example, but not limited to, parts of the human body (arm sand, legs, shoulders, heads, and the like), which can only be detected in such an image. The ANN may be also trained to make a decision on the detection of object of interest based on the analysis of the detected fragments.

In one example, a convolutional neural network (CNN) may be used as a machine learning algorithm, which may allow for more efficient detection and recognition of objects in images.

At step 240, in response to the initial detection in the analyzed image of an object fulfilling the specified parameters, the computing module 120 may use the machine learning algorithm to recognize the detected object in order to make a final decision on the match between the found object the object of interest. In this case, depending on a particular implementation, recognition can be carried out both using the same machine learning algorithm that detected the object, and/or using another machine learning algorithm, which may be implemented by the computing module 220.

In one example, recognition may consist of determining the match between the detected object and at least some of the specified parameters of the object of interest. For example, if at least 75% of the parameters match, the detected object may be declared as the object of interest.

In an example, at step 250, in response to a successful recognition of the object of interest, location of the object may be determined by analyzing the location data obtained by the GPS/Glonass module 130. Location data may contain information about the coordinates and altitude of the UAV 100 at the time of generation of the image, taking into account the data related to the image (size and format), as well as data from the image such as the size of the object (in pixels) and its position in the image. Based on the specified information, the location (coordinates) of the object of interest calculated. Also, to determine the coordinates of the object of interest, optical data on the image sensor used by the detection module 110 of the UAV 100 (for example, the lens used by the aforementioned camera) is used. In an example, a 50mm fixed lens may be used.

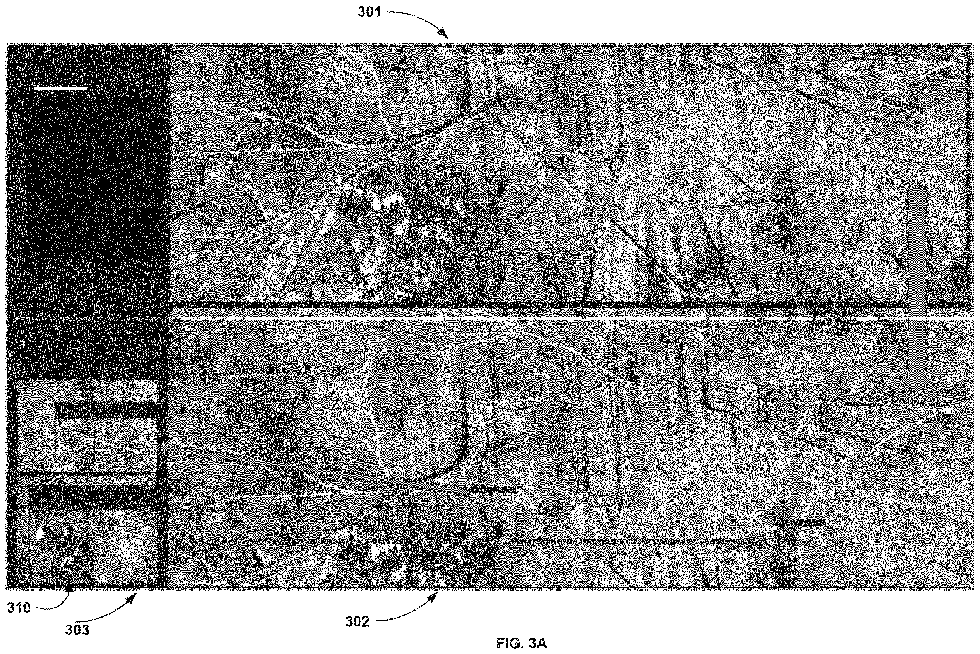

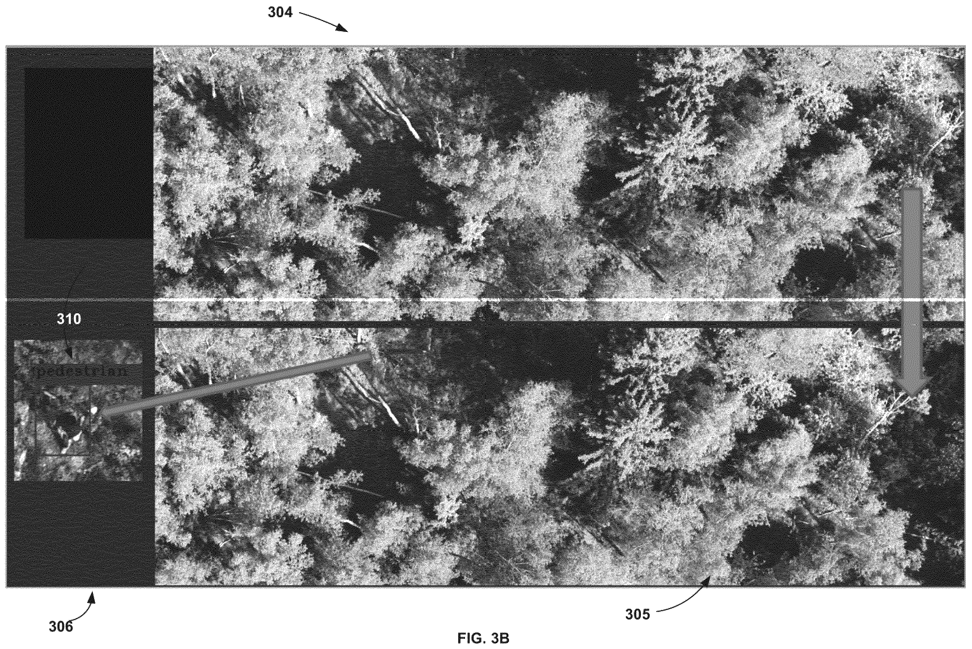

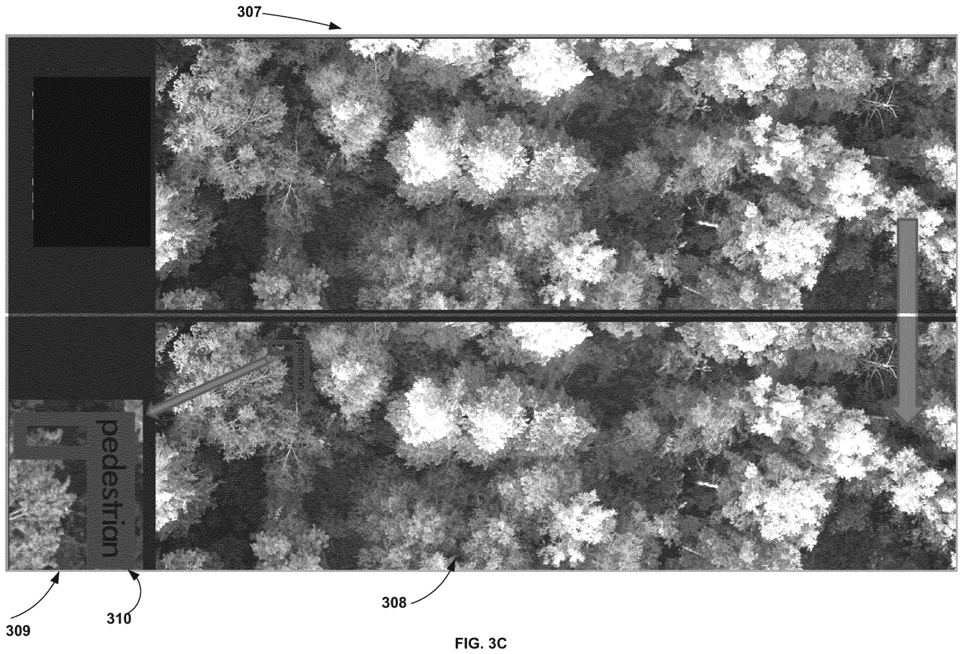

In an example, additional step 260, a file may be organized. The file may contain a part (fragment) of the image on which the object of interest was detected and recognized, and the calculated coordinates of the object of interest. An example of the selected fragment 303, 306, 309 is shown in Figures 3a-3c.

In an example, at step 270, the transmission module 140 may transmit the generated file to the ground station, while in the event connection is not available, the transmission module 140 may wait until the connection is available and may retransmit. Depending on the implementation, the ground station may be either stationary or mobile (for example, a vehicle equipped with the necessary means for receiving information and visualizing it).

In an example, at an optional step 280 the ground station may use the data from the file, to visualize the position of the object of interest on a map containing the search location. The ground station may use, for example, a web interface or a software application having similar properties for visualization.

It should be noted that in one example, the disclosed system may be implemented as a system comprising several UAVs 100 and at least one ground station. When searching (detecting and recognizing) an object, data may be exchanged between different UAV's 100 for more efficient search. Data may be exchanged both between UAVs 100 and a ground station with which the UAVs 100 communicate. At the same time, each of the UAVs 100 may be controlled from the ground station, for example, the transmission of data about the object of interest, flight path and search modes. In the system, the UAVs 100 may be implemented as various types of UAVs. For example, one UAV 100 may be of n an aircraft type, and the other one of a copter type. Advantageously, the joint use of several UAVs 100 may aggregate data from them in a single interface (at the ground station). The use of several UAVs 100 simultaneously makes it possible to increase the search area to at least several square kilometers.

Figs. 3a-3c illustrate an example of a detected and recognized object of interest presented as a fragment of an image in which the object of interest is recognized. More specifically, Figs. 3a - 3c show examples of the following images:
formation of a snapshot containing an image 301, 304, 307;
the result of detection and recognition of the found object 302, 305, 308;
a fragment 303, 306, 309 of the image 301, 304, 307 that represents the recognized search object 310.

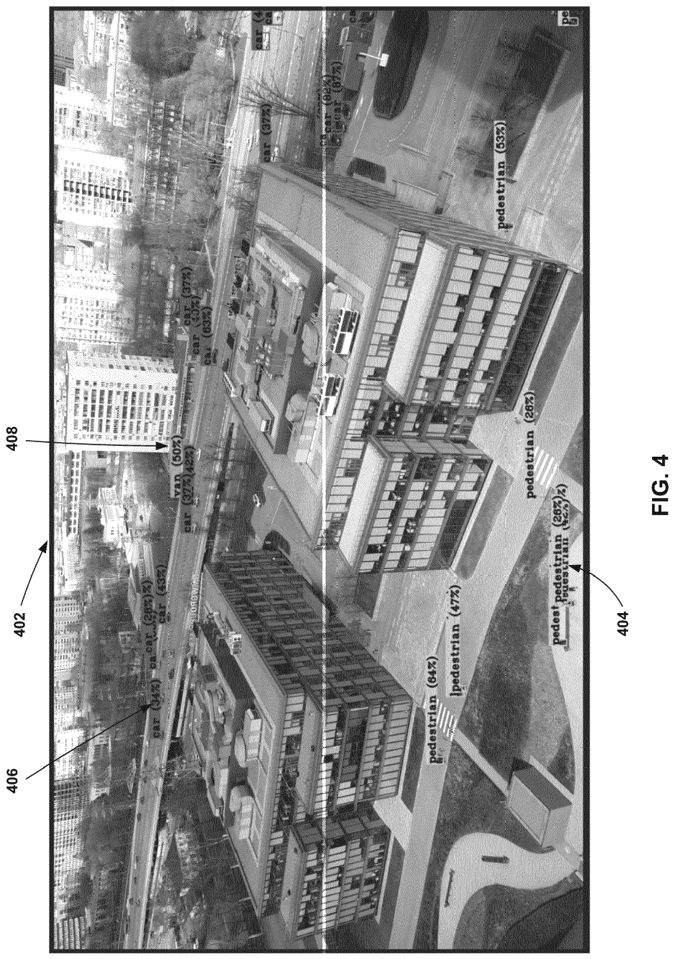

Fig. 4 presents an example of a captured image showing detected and recognized small object. More specifically, Fig. 4 illustrates the result of the application of the disclosed method for detecting and recognizing several objects. The image 402 shows a picture of a part of the city in which three types of objects were detected and recognized. The first type of object 404 is a person. Each object 404 found and recognized as a person in the image 402 is labeled in figure as "pedestrian", while also indicating the degree of confidence calculated by the ANN that may be represented in percentage terms. Each object found and recognized as a passenger car 406 in the image 402 is labeled by the word "car", while also indicating the degree of confidence. As a third type of object 408, a large-sized car of the "van" type was detected and recognized and presented in the image 402 with the designation "van" and the corresponding degree of confidence.

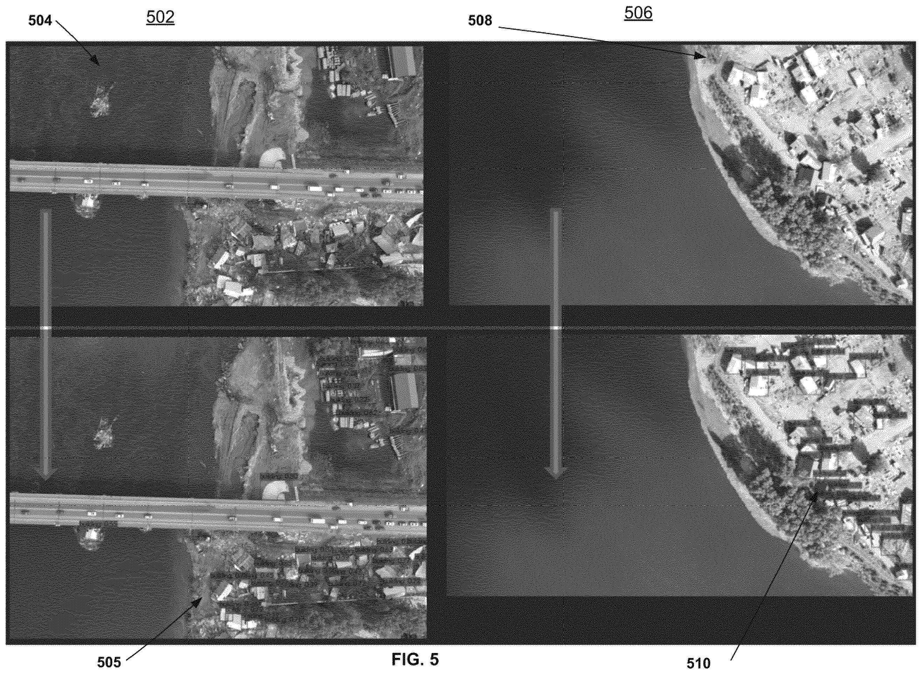

FIG. 5 shows two examples of images that show the detected and recognized small objects of interest. In these examples, the task of finding objects was to search for houses located near the river.

In Example 1, the image 502 is presented, wherein in the first case, image 504 represents an image before the application of the disclosed method, and in image 505 after the application of the method. In Example 2, a second image 506 is presented, where image 508 is the incoming method, and image 510 illustrates the result of using the disclosed method.

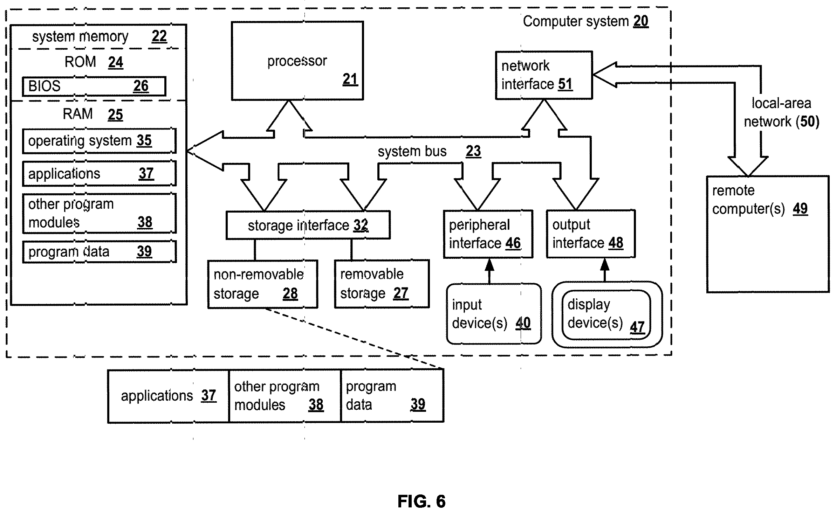

Fig. 6 shows an example of a computer system on which examples of systems and methods disclosed herein may be implemented. The computer system 20 may represent the system for determination of anomalies in a cyber-physical system of FIG. 2 and can be in the form of multiple computing devices, or in the form of a single computing device, for example, a desktop computer, a notebook computer, a laptop computer, a mobile computing device, a smart phone, a tablet computer, a server, a mainframe, an embedded device, and other forms of computing devices.

As shown, the computer system 20 includes a central processing unit (CPU) 21, a system memory 22, and a system bus 23 connecting the various system components, including the memory associated with the central processing unit 21. The system bus 23 may comprise a bus memory or bus memory controller, a peripheral bus, and a local bus that is able to interact with any other bus architecture. Examples of the buses may include PCI, ISA, PCI-Express, HyperTransport^{™}, InfiniBand^{™}, Serial ATA, I2C, and other suitable interconnects. The central processing unit 21 (also referred to as a processor) can include a single or multiple sets of processors having single or multiple cores. The processor 21 may execute one or more computer-executable code implementing the techniques of the present disclosure. The system memory 22 may be any memory for storing data used herein and/or computer programs that are executable by the processor 21. The system memory 22 may include volatile memory such as a random access memory (RAM) 25 and non-volatile memory such as a read only memory (ROM) 24, flash memory, etc., or any combination thereof. The basic input/output system (BIOS) 26 may store the basic procedures for transfer of information between elements of the computer system 20, such as those at the time of loading the operating system with the use of the ROM 24.

The computer system 20 may include one or more storage devices such as one or more removable storage devices 27, one or more non-removable storage devices 28, or a combination thereof. The one or more removable storage devices 27 and non-removable storage devices 28 are connected to the system bus 23 via a storage interface 32. In an example, the storage devices and the corresponding computer-readable storage media are power-independent modules for the storage of computer instructions, data structures, program modules, and other data of the computer system 20. The system memory 22, removable storage devices 27, and non-removable storage devices 28 may use a variety of computer-readable storage media. Examples of computer-readable storage media include machine memory such as cache, SRAM, DRAM, zero capacitor RAM, twin transistor RAM, eDRAM, EDO RAM, DDR RAM, EEPROM, NRAM, RRAM, SONOS, PRAM; flash memory or other memory technology such as in solid state drives (SSDs) or flash drives; magnetic cassettes, magnetic tape, and magnetic disk storage such as in hard disk drives or floppy disks; optical storage such as in compact disks (CD-ROM) or digital versatile disks (DVDs); and any other medium which may be used to store the desired data and which can be accessed by the computer system 20.

The system memory 22, removable storage devices 27, and non-removable storage devices 28 of the computer system 20 may be used to store an operating system 35, additional program applications 37, other program modules 38, and program data 39. The computer system 20 may include a peripheral interface 46 for communicating data from input devices 40, such as a keyboard, mouse, stylus, game controller, voice input device, touch input device, or other peripheral devices, such as a printer or scanner via one or more I/O ports, such as a serial port, a parallel port, a universal serial bus (USB), or other peripheral interface. A display device 47 such as one or more monitors, projectors, or integrated display, may also be connected to the system bus 23 across an output interface 48, such as a video adapter. In addition to the display devices 47, the computer system 20 may be equipped with other peripheral output devices (not shown), such as loudspeakers and other audiovisual devices.

The computer system 20 may operate in a network environment, using a network connection to one or more remote computers 49. The remote computer (or computers) 49 may be local computer workstations or servers comprising most or all of the aforementioned elements in describing the nature of a computer system 20. Other devices may also be present in the computer network, such as, but not limited to, routers, network stations, peer devices or other network nodes. The computer system 20 may include one or more network interfaces 51 or network adapters for communicating with the remote computers 49 via one or more networks such as a local-area computer network (LAN) 50, a wide-area computer network (WAN), an intranet, and the Internet. Examples of the network interface 51 may include an Ethernet interface, a Frame Relay interface, SONET interface, and wireless interfaces.

The example embodiments of the present invention may be implemented as a system or a method and/or a computer program product. The computer program product may include a computer readable storage medium (or media) having computer readable program instructions thereon for causing a processor to carry out systems and methods of the present invention.

The computer readable storage medium can be a tangible device that can retain and store program code in the form of instructions or data structures that can be accessed by a processor of a computing device, such as the computing system 20. The computer readable storage medium may be an electronic storage device, a magnetic storage device, an optical storage device, an electromagnetic storage device, a semiconductor storage device, or any suitable combination thereof. By way of example, such computer-readable storage medium can comprise a random access memory (RAM), a read-only memory (ROM), EEPROM, a portable compact disc read-only memory (CD-ROM), a digital versatile disk (DVD), flash memory, a hard disk, a portable computer diskette, a memory stick, a floppy disk, or even a mechanically encoded device such as punch-cards or raised structures in a groove having instructions recorded thereon. As used herein, a computer readable storage medium is not to be construed as being transitory signals per se, such as radio waves or other freely propagating electromagnetic waves, electromagnetic waves propagating through a waveguide or transmission media, or electrical signals transmitted through a wire.

Computer readable program instructions described herein can be downloaded to respective computing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network interface in each computing device receives computer readable program instructions from the network and forwards the computer readable program instructions for storage in a computer readable storage medium within the respective computing device.

Computer readable program instructions for carrying out operations of the present disclosure may be assembly instructions, instruction-set-architecture (ISA) instructions, machine instructions, machine dependent instructions, microcode, firmware instructions, state-setting data, or either source code or object code written in any combination of one or more programming languages, including an object oriented programming language, and conventional procedural programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a LAN or WAN, or the connection may be made to an external computer (for example, through the Internet). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry.

In various examples, the systems and methods described in the present disclosure can be addressed in terms of modules. The term "module" as used herein refers to a real-world device, component, or arrangement of components implemented using hardware, such as by an application specific integrated circuit (ASIC) or FPGA, for example, or as a combination of hardware and software, such as by a microprocessor system and a set of instructions to implement the module's functionality, which (while being executed) transform the microprocessor system into a special-purpose device. A module may also be implemented as a combination of the two, with certain functions facilitated by hardware alone, and other functions facilitated by a combination of hardware and software. In certain implementations, at least a portion, and in some cases, all, of a module may be executed on the processor of a computer system. Accordingly, each module may be realized in a variety of suitable configurations, and should not be limited to any particular implementation exemplified herein.

In the interest of clarity, not all of the routine features of the example embodiments are disclosed herein. It would be appreciated that in the development of any actual implementation of the present disclosure, numerous implementation-specific decisions must be made in order to achieve the developer's specific goals, and these specific goals will vary for different implementations and different developers. It is understood that such a development effort might be complex and time-consuming, but would nevertheless be a routine undertaking of engineering for those of ordinary skill in the art, having the benefit of this disclosure.

Furthermore, it is to be understood that the phraseology or terminology used herein is for the purpose of description and not of restriction, such that the terminology or phraseology of the present specification is to be interpreted by the skilled in the art in light of the teachings and guidance presented herein, in combination with the knowledge of those skilled in the relevant art(s). Moreover, it is not intended for any term in the specification or claims to be ascribed an uncommon or special meaning unless explicitly set forth as such.

## Claims

1. A method for detecting a small object based on image analysis, wherein the small object is an object that occupies a couple of tens of pixels in an image having a resolution of at least 4K pixels, and wherein the method is executed by an unmanned aerial vehicle (UAV), the method including the steps of:
obtaining object search parameters, wherein the search parameters include at least one characteristic of an object of interest;
generating, during a flight of the UAV, at least one image containing a high-resolution image;
analyzing the generated image using a machine learning algorithm based on the obtained search parameters;
recognizing the object of interest using the machine learning algorithm if at least one object fulfilling the search parameters is detected in the image during the analysis; and
determining the location of the detected object, in response to recognizing the object as the object of interest, wherein location of the object of interest is determined based on GPS coordinates of the UAV, and altitude of the UAV at the time of generation of the image in which the object of interest was found, and based on data from the image about the size of the object of interest and position of the object of interest within the obtained image.

2. The method according to claim 1, wherein a detection of object of interest is performed by the UAV in real time.

3. The method according to any of claims 1 to 2, wherein the machine learning algorithm is trained based on the search parameters corresponding to the object of interest.

4. The method according to any of claims 1 to 3, wherein frequency of generation of images comprises about 1 image per second.

5. The method according to any of claims 1 to 4, wherein the machine learning algorithm comprises a convolutional neural network (CNN).

6. The method according to any of claims 1 to 5, wherein a fragment of the image on which the object of interest was recognized is represented in an enlarged form and wherein the fragment indicates the location of the object of interest.

7. The method according to claim 6, wherein the fragment of the image contains information about the type of object of interest and corresponding probability of a match.

8. The method according to claim 6, wherein a generated file comprising the fragment of the generated image with the object of interest and the location of the object of interest, is transmitted over a communication channel to a receiving party.

9. The method according to claim 8, wherein the receiving party comprises a ground station and wherein a receiver is an operator of the UAV.

10. The method according to claim 11, wherein locations of the object of interest are visualized on a map, by the ground station, based on data received from the UAV.

11. A system for detecting a small object by using an unmanned arial vehicle (UAV) based on image analysis, wherein the small object is an object that occupies a couple of tens of pixels in an image having a resolution of at least 4K pixels, the system of the UAV comprising:
a memory and a hardware processor configured to:
obtain object search parameters, wherein the search parameters include at least one characteristic of an object of interest;
generate, during a flight of the UAV, at least one image containing a high-resolution image; analyze the generated image using the machine learning algorithm based on the obtained search parameters;
recognize the object of interest using a machine learning algorithm if at least one object fulfilling the search parameters is detected in the image during the analysis; and
determine the location of the detected object, in response to recognizing the object as the object of interest, wherein location of the object of interest is determined based on GPS coordinates of the UAV, and altitude of the UAV at the time of generation of the image in which the object of interest was found, and based on data from the image about the size of the object of interest and position of the object of interest within the obtained image.

12. The system according to claim 11, wherein a detection of object of interest is performed by the UAV in real time.

13. The system according to any of claims 11 to 12, wherein the machine learning algorithm is trained based on the search parameters corresponding to the object of interest.

14. The system according to claim 11, wherein frequency of generation of images comprises about 1 image per second.

## Patentansprüche

1. Verfahren zur Erkennung eines kleinen Objekts basierend auf Bildanalyse, wobei das kleine Objekt ein Objekt ist, das ein Paar Zehner von Pixeln in einem Bild aufweisend eine Auflösung von mindestens 4K-Pixeln, besetzt,
und wobei das Verfahren durch ein unbemanntes Luftfahrzeug (UAV) ausgeführt wird, das Verfahren umfassend die folgenden Schritte:
Erhalten Objekt-Suchparametern, wobei die Suchparameter mindestens ein Merkmal eines interessierenden Objekts umfassen;
Erzeugen, während eines Flugs des UAV, mindestens eines Bildes enthaltend ein hochauflösendes Bild;
Analysieren des erzeugten Bildes unter Verwendung eines Maschinenlernalgorithmus basierend auf den erhaltenen Suchparametern;
Erkennen des interessierenden Objekts unter Verwendung des Maschinenlernalgorithmus, wenn mindestens ein Objekt, das die Suchparameter erfüllt, in dem Bild während der Analyse erkannt wird; und
Bestimmen der Position des erkannten Objekts, als Reaktion auf das Erkennen des Objekts als das interessierende Objekt, wobei die Position des interessierenden Objekts basierend auf GPS-Koordinaten des UAV und der Höhe des UAV zum Zeitpunkt der Erzeugung des Bildes, in dem das interessierende Objekt gefunden wurde, sowie basierend auf Daten aus dem Bild über die Größe des interessierenden Objekts und die Position des interessierenden Objekts in dem erhaltenen Bild, bestimmt wird.

2. Verfahren nach Anspruch 1, wobei eine Erkennung des interessierenden Objekts durch das UAV in Echtzeit durchgeführt wird.

3. Verfahren nach einem der Ansprüche 1 bis 2, wobei der Maschinenlernalgorithmus basierend auf den Suchparametern, die dem interessierenden Objekt entsprechen, trainiert wird.

4. Verfahren nach einem der Ansprüche 1 bis 3, wobei die Frequenz der Erzeugung von Bildern etwa 1 Bild pro Sekunde umfasst.

5. Verfahren nach einem der Ansprüche 1 bis 4, wobei der Maschinenlernalgorithmus ein konvolutionales neuronales Netzwerk (CNN) umfasst.

6. Verfahren nach einem der Ansprüche 1 bis 5, wobei ein Fragment des Bildes, auf dem das interessierende Objekt erkannt wurde, in vergrößerter Form dargestellt wird und wobei das Fragment die Position des interessierenden Objekts anzeigt.

7. Verfahren nach Anspruch 6, wobei das Fragment des Bildes Informationen über den Typ des interessierenden Objekts und die entsprechende Übereinstimmungswahrscheinlichkeit enthält.

8. Verfahren nach Anspruch 6, wobei eine erzeugte Datei umfassend das Fragment des erzeugten Bildes mit dem interessierenden Objekt und der Position des interessierenden Objekts, über einen Kommunikationskanal an eine empfangende Partei übertragen wird.

9. Verfahren nach Anspruch 8, wobei die empfangende Partei eine Bodenstation umfasst und wobei ein Empfänger ein Bediener des UAV ist.

10. Verfahren nach Anspruch 11, wobei die Positionen des interessierenden Objekts auf einer Karte durch die Bodenstation, basierend auf den Daten, die von dem UAV empfangen werden, visualisiert werden.

11. System zur Erkennung eines kleinen Objekts unter Verwendung eines unbemannten Luftfahrzeugs (UAV) basierend auf der Bildanalyse, wobei das kleine Objekt ein Objekt ist, das ein Paar Zehner von Pixeln in einem Bild aufweisend eine Auflösung von mindestens 4K-Pixeln besetzt, das System des UAV umfassend:
einen Speicher und einen Hardwareprozessor, der dazu konfiguriert ist, um:
Objekt-Suchparameter zu erhalten, wobei die Suchparameter mindestens ein Merkmal eines interessierenden Objekts enthalten;
während eines Flugs des UAV ein Bild zu erzeugen, wobei mindestens ein Bild ein hochauflösendes Bild enthält; das erzeugte Bild unter Verwendung des Maschinenlernalgorithmus basierend auf den erfassten Suchparametern zu analysieren;
das interessierende Objekt unter Verwendung des Maschinenlernalgorithmus zu erkennen, wenn mindestens ein Objekt, das die Suchparameter erfüllt, während der Analyse in dem Bild erkannt wird; und
die Position des erkannten Objekts, als Reaktion auf das Erkennen des Objekts als das interessierende Objekt zu bestimmen, wobei die Position des interessierenden Objekts basierend auf GPS-Koordinaten des UAV und der Höhe des UAV zum Zeitpunkt der Erzeugung des Bildes, in dem das interessierende Objekt gefunden wurde, sowie basierend auf Daten aus dem Bild über die Größe des interessierenden Objekts und die Position des interessierenden Objekts in dem erfassten Bild bestimmt wird.

12. System nach Anspruch 11, wobei eine Erkennung des interessierenden Objekts durch das UAV in Echtzeit durchgeführt wird.

13. System nach einem der Ansprüche 11 bis 12, wobei der Maschinenlernalgorithmus basierend auf dem Suchparametern, die dem interessierenden Objekt entsprechen, trainiert wird.

14. System nach Anspruch 11, wobei die Frequenz der Erzeugung von Bildern etwa 1 Bild pro Sekunde umfasst.

## Revendications

1. Procédé de détection d'un petit objet basé sur l'analyse d'image, ledit petit objet étant un objet occupant quelques dizaines de pixels dans une image ayant une résolution d'au moins 4K pixels, et ledit procédé étant exécuté par un véhicule aérien sans pilote (UAV), le procédé comprenant les étapes consistant à :
obtenir des paramètres de recherche d'objet, lesdits paramètres de recherche comprenant au moins une caractéristique d'un objet d'intérêt ;
générer, pendant un vol de l'UAV, au moins une image contenant une image haute résolution ;
analyser l'image générée à l'aide d'un algorithme d'apprentissage automatique basé sur les paramètres de recherche obtenus ;
reconnaître l'objet d'intérêt à l'aide de l'algorithme d'apprentissage automatique si au moins un objet satisfaisant les paramètres de recherche est détecté dans l'image pendant l'analyse ; et
déterminer la position de l'objet détecté, en réponse à la reconnaissance de l'objet comme étant l'objet d'intérêt, la position de l'objet d'intérêt étant déterminée sur la base des coordonnées GPS de l'UAV et de l'altitude de l'UAV au moment de la génération de l'image dans laquelle l'objet d'intérêt a été trouvé, et sur la base des données de l'image relatives à la taille de l'objet d'intérêt et à la position de l'objet d'intérêt dans l'image obtenue.

2. Le procédé selon la revendication 1, dans lequel une détection de l'objet d'intérêt est effectuée en temps réel par l'UAV.

3. Le procédé selon l'une quelconque des revendications 1 à 2, dans lequel l'algorithme d'apprentissage automatique est entraîné sur la base des paramètres de recherche correspondant à l'objet d'intérêt.

4. Le procédé selon l'une quelconque des revendications 1 à 3, dans lequel la fréquence de génération des images comprend environ 1 image par seconde.

5. Le procédé selon l'une quelconque des revendications 1 à 4, dans lequel l'algorithme d'apprentissage automatique comprend un réseau de neurones convolutif (CNN).

6. Le procédé selon l'une quelconque des revendications 1 à 5, dans lequel un fragment de l'image sur lequel l'objet d'intérêt a été reconnu est représenté sous une forme agrandie et dans lequel le fragment indique la position de l'objet d'intérêt.

7. Le procédé selon la revendication 6, dans lequel le fragment de l'image contient des informations relatives au type d'objet d'intérêt et à la probabilité correspondante de correspondance.

8. Le procédé selon la revendication 6, dans lequel un fichier généré comprenant le fragment de l'image générée avec l'objet d'intérêt et la position de l'objet d'intérêt, est transmis via un canal de communication à une partie réceptrice.

9. Le procédé selon la revendication 8, dans lequel la partie réceptrice comprend une station au sol et dans lequel un récepteur est un opérateur de l'UAV.

10. Le procédé selon la revendication 11, dans lequel les positions de l'objet d'intérêt sont visualisées sur une carte, par la station au sol, sur la base des données reçues de l'UAV.

11. Système de détection d'un petit objet à l'aide d'un véhicule aérien sans pilote (UAV) basé sur l'analyse d'image, ledit petit objet étant un objet occupant quelques dizaines de pixels dans une image ayant une résolution d'au moins 4K pixels, le système de l'UAV comprenant :
une mémoire et un processeur matériel configurés pour :
obtenir des paramètres de recherche d'objet, lesdits paramètres de recherche comprenant au moins une caractéristique d'un objet d'intérêt ;
générer, pendant un vol de l'UAV, au moins une image contenant une image haute résolution ;
analyser l'image générée à l'aide de l'algorithme d'apprentissage automatique basé sur les paramètres de recherche obtenus ;
reconnaître l'objet d'intérêt à l'aide de l'algorithme d'apprentissage automatique si au moins un objet satisfaisant les paramètres de recherche est détecté dans l'image pendant l'analyse ; et
déterminer la position de l'objet détecté, en réponse à la reconnaissance de l'objet comme étant l'objet d'intérêt, la position de l'objet d'intérêt étant déterminée sur la base des coordonnées GPS de l'UAV et de l'altitude de l'UAV au moment de la génération de l'image dans laquelle l'objet d'intérêt a été trouvé, et sur la base des données de l'image relatives à la taille de l'objet d'intérêt et à la position de l'objet d'intérêt dans l'image obtenue.

12. Le système selon la revendication 11, dans lequel une détection de l'objet d'intérêt est effectuée en temps réel par l'UAV.

13. Le système selon l'une quelconque des revendications 11 à 12, dans lequel l'algorithme d'apprentissage automatique est entraîné sur la base des paramètres de recherche correspondant à l'objet d'intérêt.

14. Le système selon la revendication 11, dans lequel la fréquence de génération des images comprend environ 1 image par seconde.
